# EUROPEAN PATENT APPLICATION

(11) **EP 4 167 337 A1**
(43) Date of publication of application: **19.04.2023**
(21) Application number: 21851292.9
(22) Date of filing: 26.07.2021
(51) Int. Cl.: H01M 10/0567, H01G 11/30, H01G 11/64, H01M 4/505, H01M 4/525

(54) **ADDITIVE FOR NON-AQUEOUS ELECTROLYTE, NON-AQUEOUS ELECTROLYTE, AND POWER STORAGE DEVICE**

(30) Priority: 31.07.2020 JP 2020131021
(71) Applicant: Sumitomo Seika Chemicals Co., Ltd., Kako-gun, Hyogo 675-0145 (JP)
(72) Inventor: KONO Yuki, Kako-gun, Hyogo 675-0145 (JP); INUI Moe, Kako-gun, Hyogo 675-0145 (JP)
(74) Representative: Vossius & Partner Patentanwälte Rechtsanwälte mbB
(86) International application number: PCT/JP2021/027574
(87) International publication number: WO 2022/025002

(57) **Abstract**

Disclosed is an additive for a nonaqueous electrolyte solution, containing a first compound represented by Formula (1) and a second compound which is a carbonate compound, a cyclic sulfone compound, and/or a cyclic disulfonic acid ester compound.

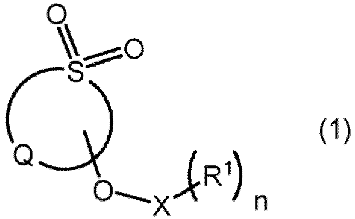

[In Formula (1), Q represents an alkenylene group having 4 to 8 carbon atoms, which forms a cyclic group together with a sulfur atom of a sulfonyl group, X represents a sulfonyl group, a carbonyl group, or a phosphoryl group, R¹ represents an alkyl group having 1 to 4 carbon atoms, an alkenyl group having 2 to 6 carbon atoms, an alkynyl group having 2 to 6 carbon atoms, an aryl group, an alkoxy group having 1 to 4 carbon atoms, an alkenyloxy group having 2 to 6 carbon atoms, an alkynyloxy group having 2 to 6 carbon atoms, or an aryloxy group, and n represents 1 or 2.]

## Description

### Technical Field

The present disclosure relates to an additive for a nonaqueous electrolyte solution. The present disclosure further relates to a nonaqueous electrolyte solution containing the additive for a nonaqueous electrolyte solution, and an electricity storage device using the nonaqueous electrolyte solution.

### Background Art

In recent years, along with an increase in attention to solving environmental problems and establishing a sustainable recycling-based society, nonaqueous electrolyte solution secondary batteries typified by lithium ion batteries and electricity storage devices such as an electric double layer capacitor have been widely studied. Since the lithium ion batteries have a high working voltage and a high energy density, they are used as a power source for electronic devices such as laptop computers, electric vehicles, or electricity storage. Since these lithium ion batteries have a higher energy density than lead-acid batteries or nickel-cadmium batteries, and have a higher capacity realized, there is an increasing demand for lithium ion batteries as batteries having a high output as well as a high energy density with a high capacity, which can be installed in hybrid and electric vehicles.

Among the battery performances required for the lithium ion batteries, a long life is required, particularly for lithium ion batteries for automobiles. In other words, it is a major issue to sufficiently satisfy a need to reduce the resistance of batteries by maintaining the capacity of the batteries.

As a method of obtaining a long-life battery, a method of adding various additives to an electrolyte solution has been studied. The additives are decomposed during an initial charge/discharge to form a film called a solid electrolyte interface (SEI) on a surface of an electrode. Since the SEI is formed during the initial cycle of the charge/discharge cycles, consumption of electricity for decomposition of a solvent and the like in the electrolyte solution is reduced, the lithium ions can be transferred between electrodes through the SEI. That is, formation of the SEI prevents the deterioration of electricity storage devices such as a nonaqueous electrolyte solution secondary battery in a case where the charge/discharge cycles are repeated, and thus contributes to an improvement of battery characteristics, storage characteristics, load characteristics, or the like.

For example, Patent Literature 1 discloses that the charge/discharge cycle characteristics of a lithium secondary battery are improved by adding 1,3-propanesultone (PS) as a compound that forms an SEI into an electrolyte solution. Patent Literature 2 discloses that the discharge characteristics and the like of a lithium secondary battery are improved by adding a derivative of vinylene carbonate (VC) as an additive. Patent Literatures 3 and 4 disclose that the addition of a cyclic disulfonic acid ester as an additive improves battery performances such as cycle characteristics. Patent Literature 5 discloses that a charge/discharge efficiency, storage characteristics, and cycle characteristics are improved by incorporating a vinylene carbonate compound and/or a vinylethylene carbonate compound, and an acid anhydride into a nonaqueous electrolyte solution.

### Citation List

### Patent Literature

[Patent Literature 1] Japanese Unexamined Patent Publication No. S63-102173
[Patent Literature 2] Japanese Unexamined Patent Publication No. H5-74486
[Patent Literature 3] Japanese Unexamined Patent Publication No. 2004-281368
[Patent Literature 4] Japanese Unexamined Patent Publication No. 2015-138597
[Patent Literature 5] Japanese Unexamined Patent Publication No. 2002-352852
[Patent Literature 6] WO2018/164124
[Patent Literature 7] Japanese Unexamined Patent Publication No. 2010-138157
[Patent Literature 8] Japanese Unexamined Patent Publication No. H11-180974
[Patent Literature 9] Japanese Unexamined Patent Publication No. 2001-52738
[Patent Literature 10] Japanese Unexamined Patent Publication No. 2005-336155

### Summary of Invention

### Technical Problem

However, nonaqueous electrolyte solutions using additives in the related art have not yet been sufficiently effective in achieving both a reduction in a battery resistance and the maintenance of a battery capacity.

One aspect of the present disclosure relates to an additive for a nonaqueous electrolyte solution for obtaining an electricity storage device having a low initial resistance and an excellent discharge capacity maintenance rate. In addition, another aspect of the present disclosure relates to a nonaqueous electrolyte solution using an additive for a nonaqueous electrolyte solution, and an electricity storage device using the nonaqueous electrolyte solution.

### Solution to Problem

The present inventors have conducted intensive studies in order to solve the problems, and as a result, they have found that it is possible to achieve both a reduction in an initial resistance and a discharge capacity maintenance rate in an electricity storage device by an additive for a nonaqueous electrolyte solution, including a combination of a specific cyclic sulfone compound and at least one compound selected from the group consisting of a specific carbonate compound, a specific cyclic sulfone compound, and a specific cyclic disulfonic acid ester compound.

One aspect of the present disclosure relates to an additive for a nonaqueous electrolyte solution, containing a first compound represented by Formula (1), and at least one second compound selected from the group consisting of a compound represented by Formula (2-1), a compound represented by Formula (2-2), and a compound represented by Formula (2-3).

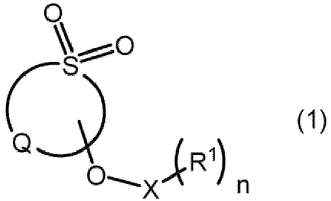

In Formula (1), Q represents an alkenylene group having 4 to 8 carbon atoms, which may be substituted, the alkenylene group forming a cyclic group together with a sulfur atom of a sulfonyl group, and X represents a sulfonyl group, a carbonyl group, or a phosphoryl group. R¹ represents an alkyl group having 1 to 4 carbon atoms, which may be substituted, an alkenyl group having 2 to 6 carbon atoms, which may be substituted, an alkynyl group having 2 to 6 carbon atoms, which may be substituted, an aryl group which may be substituted, an alkoxy group having 1 to 4 carbon atoms, which may be substituted, an alkenyloxy group having 2 to 6 carbon atoms, which may be substituted, an alkynyloxy group having 2 to 6 carbon atoms, which may be substituted, or an aryloxy group which may be substituted, and n represents 1 or 2.

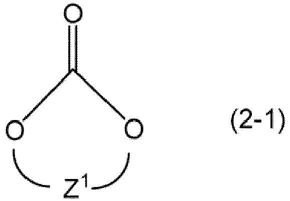

In Formula (2-1), Z¹ represents an alkylene group having 1 to 3 carbon atoms, which may be substituted, or an alkenylene group having 2 to 4 carbon atoms, which may be substituted.

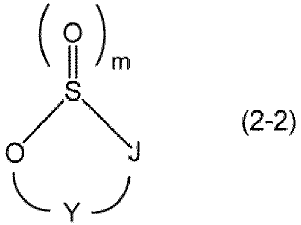

In Formula (2-2), Y represents an alkylene group having 1 to 3 carbon atoms, or an alkenylene group having 2 to 4 carbon atoms, which may be substituted, J represents an oxygen atom or a single bond, and m represents 1 or 2.

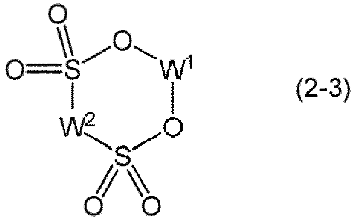

In Formula (2-3), W¹ and W² each independently represent a substituted or unsubstituted alkylene group having 1 to 3 carbon atoms, which may be branched, a substituted or unsubstituted perfluoroalkylene group having 1 to 3 carbon atoms, which may be branched, or a substituted or unsubstituted fluoroalkylene group having 1 to 3 carbon atoms, which may be branched.

### Advantageous Effects of Invention

According to one aspect of the present disclosure, provided is an additive for a nonaqueous electrolyte solution for obtaining an electricity storage device having a low initial resistance and an excellent discharge capacity maintenance rate. The additive for a nonaqueous electrolyte solution according to one aspect of the present disclosure can form a solid electrolyte interface (SEI) that is stable on an electrode surface in a case of being used in an electricity storage device such as a nonaqueous electrolyte solution secondary battery and an electric double layer capacitor to improve a capacity maintenance rate during a cycle test and reduce an increase in a resistance during the cycle test. The additive for a nonaqueous electrolyte solution according to one aspect of the present disclosure has a more remarkable effect, as compared with technology in the related, particularly in a case where a lithium-containing composite oxide with a high Ni ratio is used as a positive electrode active material.

### Brief Description of Drawings

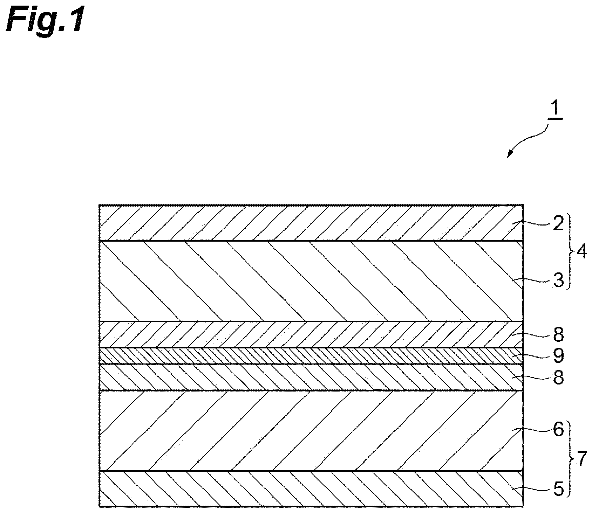

Fig. 1 is a cross-sectional view showing an example of an electricity storage device.

### Description of Embodiments

The present invention is not limited to the following examples.

On example of the additive for nonaqueous electrolyte solution include a first compound represented by Formula (1), and at least one second compound selected from the group consisting of a compound represented by Formula (2-1) (hereinafter also referred to as a "carbonate compound"), a compound represented by Formula (2-2) (hereinafter also referred to as a "cyclic sulfone compound"), and a compound represented by Formula (2-3) (hereinafter also referred to as a "cyclic disulfonic acid ester compound").

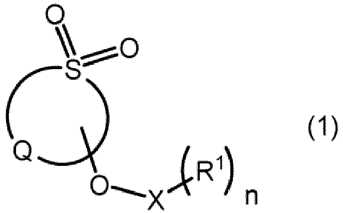

In Formula (1), Q represents an alkenylene group having 4 to 8 carbon atoms, which may be substituted, the alkenylene group forming a cyclic group together with a sulfur atom of a sulfonyl group. X represents a sulfonyl group, a carbonyl group, or a phosphoryl group. R¹ represents an alkyl group having 1 to 4 carbon atoms, which may be substituted, an alkenyl group having 2 to 6 carbon atoms, which may be substituted, an alkynyl group having 2 to 6 carbon atoms, which may be substituted, an aryl group which may be substituted, an alkoxy group having 1 to 4 carbon atoms, which may be substituted, an alkenyloxy group having 2 to 6 carbon atoms, which may be substituted, an alkynyloxy group having 2 to 6 carbon atoms, which may be substituted, or an aryloxy group which may be substituted, n represents 1 or 2.

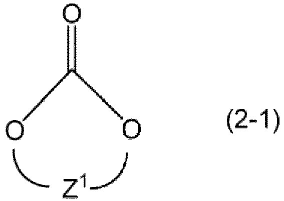

In Formula (2-1), Z¹ represents an alkylene group having 1 to 3 carbon atoms, which may be substituted, or an alkenylene group having 2 to 4 carbon atoms, which may be substituted.

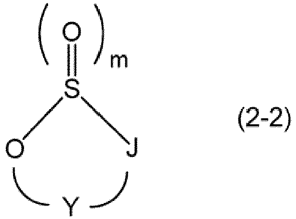

In Formula (2-2), Y represents an alkylene group having 1 to 3 carbon atoms, or an alkenylene group having 2 to 4 carbon atoms, which may be substituted, J represents an oxygen atom or a single bond, and m represents 1 or 2.

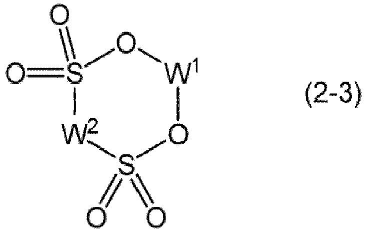

In Formula (2-3), W¹ and W² each independently represent a substituted or unsubstituted alkylene group having 1 to 3 carbon atoms, which may be branched, a substituted or unsubstituted perfluoroalkylene group having 1 to 3 carbon atoms, which may be branched, or a substituted or unsubstituted fluoroalkylene group having 1 to 3 carbon atoms, which may be branched.

X in Formula (1) represents a sulfonyl group, a carbonyl group, or a phosphoryl group. Typically, in a case where X is a sulfonyl group (-S(=O)₂-) or a carbonyl group (-C(=O)-), n is 1, and in a case where X is a phosphoryl group (-P(=O)<), n is 2. In a case of n = 2, two R¹'s may be the same as or different from each other. From the viewpoint of further reducing the initial resistance, X may be a sulfonyl group.

In Formula (1), Q is an alkenylene group having 4 to 8 carbon atoms, which forms a cyclic group together with a sulfur atom of a sulfonyl group, and is substituted with a group represented by -O-X-(R¹)ₙ at any position. Q may be further substituted with a substituent other than -O-X-(R¹)ₙ. The substituent other than -O-X-(R¹)ₙ may be, for example, a halogen atom. The alkenylene group as Q in Formula (1) may have a double bond formed by a carbon atom bonded to a sulfur atom of a sulfonyl group, and a carbon atom adjacent thereto.

In a case where R¹ in Formula (1) is an alkyl group having 1 to 4 carbon atoms, an alkenyl group having 2 to 6 carbon atoms, an alkynyl group having 2 to 6 carbon atoms, an alkoxy group having 1 to 4 carbon atoms, an alkenyloxy group having 2 to 6 carbon atoms, or an alkynyloxy group having 2 to 6 carbon atoms, a substituent which may be contained in these groups may be, for example, a halogen atom, an aryl group, a halogenated aryl group (for example, fluorinated aryl groups such as a 2-fluorophenyl group, a 3-fluorophenyl group, a 4-fluorophenyl group, and a perfluorophenyl group), an alkoxy group, a halogenated alkoxy group, or a combination thereof. In a case where R¹ is an aryl group or an aryloxy group, a substituent which may be contained in the group may be, for example, a halogen atom, an alkyl group, a halogenated alkyl group (for example, fluorinated alkyl groups such as a trifluoromethyl group and a 2,2,2-trifluoroethyl group), an alkoxy group, a halogenated alkoxy group, or a combination thereof. In the present specification, the expression, "may be substituted with a halogen atom", means that at least one hydrogen atom in each group may be substituted with a halogen atom. Examples of the halogen atom in this case include an iodine atom, a bromine atom, and a fluorine atom. From the viewpoint that the battery resistance is lowered, the fluorine atom can be selected.

In R¹ in Formula (1), the alkyl group having 1 to 4 carbon atoms may be substituted with a halogen atom, an aryl group, or a halogenated aryl group. Examples of the alkyl group having 1 to 4 carbon atoms, which may be substituted with a halogen atom, an aryl group, or a halogenated aryl group include a methyl group, an ethyl group, an n-propyl group, an isopropyl group, an n-butyl group, an isobutyl group, and a tert-butyl group. From the viewpoint that the battery resistance is easily lowered, the methyl group may be selected as the alkyl group.

In R¹ in Formula (1), the alkenyl group having 2 to 6 carbon atoms may be substituted with a halogen atom. Examples of the alkenyl group having 2 to 6 carbon atoms, which may be substituted with a halogen atom, include a vinyl group, an allyl group, an isopropenyl group, a 1-butenyl group, a 2-butenyl group, a 3-butenyl group, an isobutenyl group, and a 1,1-difluoro-1-propenyl group. From the viewpoint of facilitating the formation of a stronger SEI, the allyl group which may be substituted with a halogen atom may be selected as the alkenyl group having 2 to 6 carbon atoms.

In R¹ in Formula (1), the alkynyl group having 2 to 6 carbon atoms may be substituted with a halogen atom. Examples of the alkynyl group having 2 to 6 carbon atoms, which may be substituted with a halogen atom, include a 1-propynyl group, a 2-propynyl group, a 1-butynyl group, a 2-butynyl group, and a 3-butynyl group. From the viewpoint that a stronger SEI is easily formed, the 2-propynyl group which may be substituted with a halogen atom may be selected as the alkynyl group having 2 to 6 carbon atoms.

In R¹ in Formula (1), the aryl group may be substituted with a halogen atom, an alkyl group, or a halogenated alkyl group. Examples of the aryl group which may be substituted with a halogen atom, an alkyl group, or a halogenated alkyl group include a phenyl group, a tosyl group, a xylyl group, and a naphthyl group.

In R¹ in Formula (1), the alkoxy group having 1 to 4 carbon atoms may be substituted with a halogen atom, an aryl group, or a halogenated aryl group. Examples of the alkoxy group having 1 to 4 carbon atoms, which may be substituted with a halogen atom, an aryl group, or a halogenated aryl group include a methoxy group, an ethoxy group, an n-propoxy group, an n-butoxy group, and a 2,2,2-trifluoroethoxy group.

In R¹ in Formula (1), the alkenyloxy group having 2 to 6 carbon atoms may be substituted with a halogen atom. Examples of the alkenyloxy group having 2 to 6 carbon atoms, which may be substituted with a halogen atom, include a 2-propenyloxy group, a 1-methyl-2-propenyloxy group, a 2-methyl-2-propenyloxy group, a 2-butenyloxy group, and a 3-butenyloxy group.

In R¹ in Formula (1), the alkynyloxy group having 2 to 6 carbon atoms may be substituted with a halogen atom. Examples of the alkynyloxy group having 2 to 6 carbon atoms, which may be substituted with a halogen atom, include a 2-propynyloxy group, a 1-methyl-2-propynyloxy group, a 2-methyl-2-propynyloxy group, a 2-butynyloxy group, and a 3-butynyloxy group.

In R¹ in Formula (1), the aryloxy group may be substituted with a halogen atom, an alkyl group, a halogenated alkyl group, or an alkoxy group. Examples of the aryl group which may be substituted with a halogen atom, an alkyl group, a halogenated alkyl group, or an alkoxy group include a phenoxy group, a 2-methylphenoxy group, a 3-methylphenoxy group, a 4-methylphenoxy group, a 2-ethylphenoxy group, a 3-ethylphenoxy group, a 4-ethylphenoxy group, a 2-methoxyphenoxy group, a 3-methoxyphenoxy group, a 4-methoxyphenoxy group, and a perfluorophenoxy group.

From the viewpoint that the battery resistance is more easily lowered, R¹ in Formula (1) may be an alkyl group having 1 to 3 carbon atoms, which may be substituted with a halogen atom, an alkenyl group having 2 to 4 carbon atoms, which may be substituted with a halogen atom, an alkynyl group having 2 to 4 carbon atoms, which may be substituted with a halogen atom, or an aryl group which may be substituted with a halogen atom.

By allowing R¹ in Formula (1) to contain a group having an unsaturated bond, a stronger SEI is easily formed, whereby the capacity maintenance rate is further improved. From such a viewpoint, R¹ may be an alkenyl group having 2 to 4 carbon atoms, which may be substituted with a halogen atom, an alkynyl group having 2 to 4 carbon atoms, which may be substituted with a halogen atom, an aryl group which may be substituted with a halogen atom, an alkyl group, or a halogenated alkyl group, an alkenyloxy group having 2 to 4 carbon atoms, which may be substituted with a halogen atom, an alkynyloxy group having 2 to 4 carbon atoms, which may be substituted with a halogen atom, or an aryloxy group which may be substituted with a halogen atom, an alkyl group, a halogenated alkyl group, or an alkoxy group.

From the viewpoint that a more excellent ion conductivity is exhibited, R¹ in Formula (1) may be an alkenyloxy group having 2 to 4 carbon atoms, which may be substituted with a halogen atom, an alkynyloxy group having 2 to 4 carbon atoms, which may be substituted with a halogen atom, or an aryloxy group which may be substituted with a halogen atom, an alkyl group, a halogenated alkyl group, or an alkoxy group.

The compound represented by Formula (1) may be a compound represented by Formula (3).

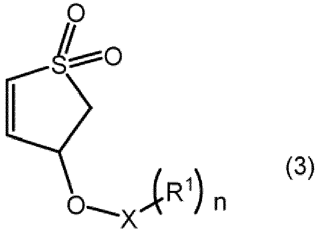

In Formula (3), X, R¹, and n have the same definitions as X, R¹ and n in Formula (1), respectively.

The first compound represented by Formula (1) or Formula (3) may be, for example, one or more selected from compounds represented by Formula (1-1), (1-2), (1-3), (1-4), (1-5), (1-6), (1-7), (1-8), (1-9), (1-10), (1-11), (1-12), or (1-13).
From the viewpoint that the initial resistance is further reduced, the first compound represented by Formula (1) or Formula (3) may be one or more selected from the compounds represented by (1-6), (1-7), (1-8), (1-9), (1-10), (1-11), (1-12), or (1-13).

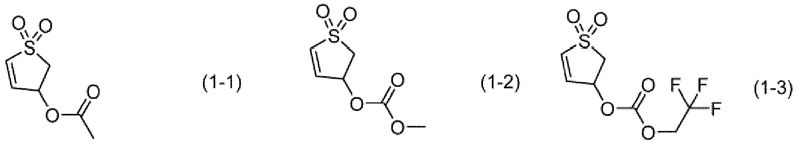

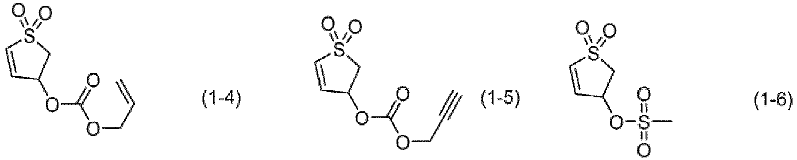

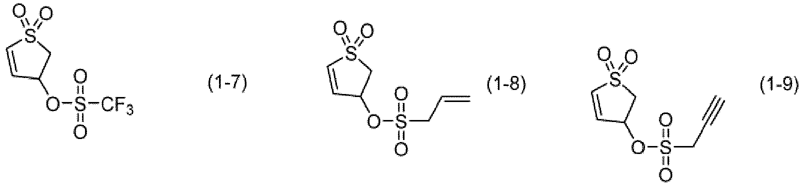

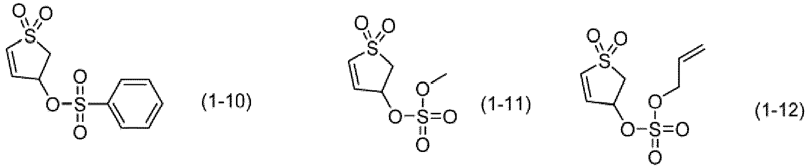

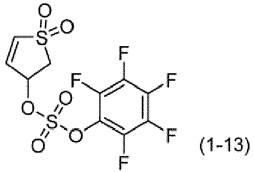

With regard to the carbonate compound represented by Formula (2-1) as the second compound, from the viewpoint that a stronger SEI is easily formed, Z¹ in Formula (2-1) may be an alkylene group having 2 or 3 carbon atoms, which may be substituted, or an alkenylene group having 2 or 3 carbon atoms, which may be substituted.

The carbonate compound represented by Formula (2-1) may be, for example, one or more selected from compounds represented by Formula (2-1a), (2-1b), (2-1c), (2-1d), (2-1e), (2-1f), (2-1g), (2-1h), or (2-1i). From the viewpoint that the negative electrode can be further protected, the compound represented by Formula (2-1a), the compound represented by Formula (2-1i), or a combination thereof may be used.

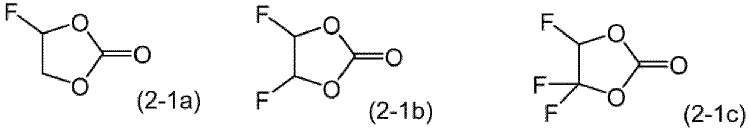

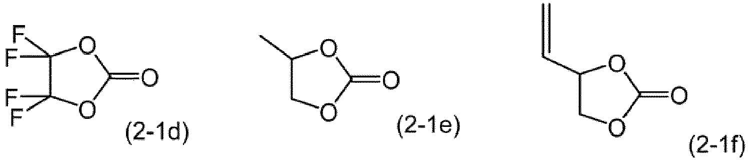

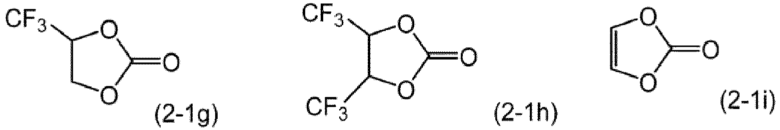

With regard to the cyclic sulfone compound represented by Formula (2-2) as the second compound, from the viewpoint that an SEI is further easily formed, Y in Formula (2-2) may be an alkylene group having 2 or 3 carbon atoms, which may be substituted, or an alkenylene group having 2 or 3 carbon atoms, which may be substituted. J may be an oxygen atom and m may be 2.

The cyclic sulfone compound represented by Formula (2-2) may be, for example, one or more selected from the compounds represented by Formula (2-2a), (2-2b), (2-2c), or (2-2d). From the viewpoint that the negative electrode can be further protected, the compound represented by Formula (2-2a), the compound represented by Formula (2-2c), or a combination thereof may be used.

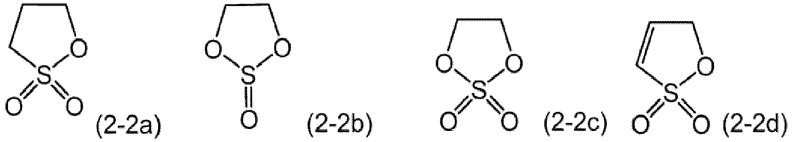

With respect to the cyclic disulfonic acid ester compound represented by Formula (2-3) as the second compound, from the viewpoint that a stronger SEI is easily formed, an alkylene group having 1 or 2 carbon atoms, a perfluoroalkylene group having 1 or 2 carbon atoms, or a fluoroalkylene group having 1 or 2 carbon atoms may be selected as W¹ and W² in Formula (2-3). W¹ and W² may be a methylene group, an ethylene group, a fluoromethylene group, or a perfluoromethylene group.

The cyclic disulfonic acid ester compound represented by Formula (2-3) may be, for example, one or more selected from compounds represented by Formula (2-3a), (2-3b), (2-3c), (2-3d), (2-3e), (2-3f), (2-3g), or (2-3h). From the viewpoint that the negative electrode can be further protected, the compound represented by Formula (2-3a) may be selected.

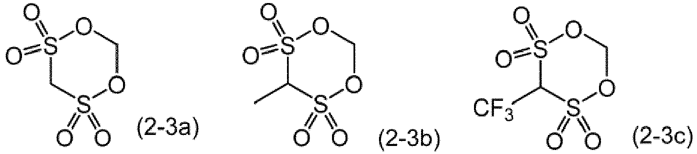

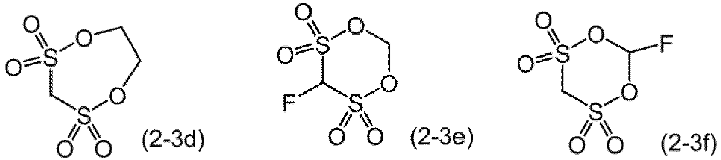

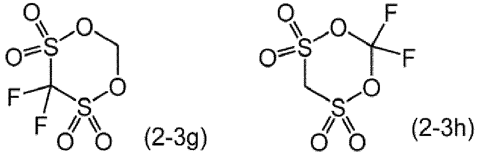

In the additive for a nonaqueous electrolyte solution, a ratio of the content of the first compound to the content of the second compound (the content of the first compound:the content of the second compound) may be 1:0.1 to 1:20, or may be 1:0.25 to 1:5, in terms of a mass ratio. In a case where the additive for a nonaqueous electrolyte solution contains two or more compounds of the compounds represented by Formula (2-1), the compound represented by Formula (2-2), and the compound represented by Formula (2-3) as the second compound, the ratio of the contents is a ratio of each content of the two or more second compounds (the content of the compound represented by Formula (2-1), the compound represented by Formula (2-2), or the compound represented by Formula (2-3)). As a result, the effect of the combination of the first compound and the second compound is more remarkable. From the same point of view, the ratio of the contents of the respective compounds can be set as follows.

In a case where the additive for a nonaqueous electrolyte solution contains the compound represented by Formula (2-1) and the compound represented by Formula (2-2) as the second compound, the ratio of the content of the first compound to the content of each of the compound represented by Formula (2-1) and the compound represented by Formula (2-2) (the content of the first compound:the content of the compound represented by Formula (2-1) or the content of the compound represented by Formula (2-2)) may be 1:0.1 to 1:30 in terms of a mass ratio.

The compound represented by Formula (1) can be synthesized using available raw materials and combining ordinary reactions thereof. For example, the compound represented by Formula (1) may be produced according to the method described in WO2018/164124.

A commercial product may be used as the second compound. The compound represented by Formula (2-1) may be produced, for example, according to the method described in Japanese Unexamined Patent Publication No. 2010-138157 or Japanese Unexamined Patent Publication No. 11-180974. The compound represented by Formula (2-2) may be produced, for example, according to the method described in Japanese Unexamined Patent Publication No. 2001-52738. The compound represented by Formula (2-3) may be produced, for example, according to the method described in Japanese Unexamined Patent Publication No. 2005-336155.

The additive for a nonaqueous electrolyte solution according to the present disclosure may include, in addition to the first compound and the second compound, other compounds and/or components which can contribute to SEI formation within a range that does not significantly impair the effect of the present invention. Examples of such other compounds and/or components include a negative electrode protective agent, a positive electrode protective agent, a flame retardant, an antistatic agent, lithium monofluorophosphate, lithium difluorophosphate, and succinonitrile.

An example of the nonaqueous electrolyte solution contains the first compound and the second compound, and an electrolyte. The nonaqueous electrolyte solution according to the present disclosure may further contain, as a nonaqueous solvent, a compound different from the first compound and the second compound as an additive. A part or all of the first compound and/or the second compound may serve as both an additive and a nonaqueous solvent.

The content of the first compound as an additive may be 0.05% by mass to 5% by mass with respect to the total amount of the nonaqueous electrolyte solution. The content of the first compound may be 0.1 % by mass or more, or may be 3% by mass or less, with respect to the total amount of the nonaqueous electrolyte solution. In a case where the first compound serves as both an additive and a nonaqueous solvent, the content of the first compound may be more than 5% by mass and 99% by mass or less with respect to the total amount of the nonaqueous electrolyte solution. In a case where the content of the first compound is 5% by mass or less, the nonaqueous solvent is usually a compound different from the first compound.

The content of the second compound as an additive may be 0.05% by mass to 5% by mass with respect to the total amount of the nonaqueous electrolyte solution. The content of the second compound may be 0.1 % by mass or more, or may be 3% by mass or less, with respect to the total amount of the nonaqueous electrolyte solution. In a case where the second compounds are two or more compounds selected from the compound represented by Formula (2-1), the compound represented by Formula (2-2), and the compound represented by Formula (2-3), the content is each content of the two or more second compounds. The content of the compound serving as both an additive and a nonaqueous solvent among the second compounds may be more than 5% by mass and 99% by mass or less with respect to the total amount of the nonaqueous electrolyte solution. In a case where the content of the compound represented by Formula (2-1) is 5% by mass or less, the nonaqueous solvent is usually a compound different from the compound represented by Formula (2-1). In a case where the content of the compound represented by Formula (2-2) is 5% by mass or less, the nonaqueous solvent is usually a compound different from the compound represented by Formula (2-2). In a case where the content of the compound represented by Formula (2-3) is 5% by mass or less, the nonaqueous solvent is usually a compound different from the compound represented by Formula (2-3).

The total content of the first compound and the second compound as additives may be 0.1% by mass to 10% by mass with respect to the total amount of the nonaqueous electrolyte solution. In a case where the total content of the first compound and the second compound is 10% by mass or less, there is little possibility that a thick SEI will be formed on the electrode and the resistance will increase. In a case where the total content of the first compound and the second compound is 0.1% by mass or more, the effect of improving resistance characteristics is further enhanced. In a case where the total content of the first compound and the second compound is 0.1% by mass to 10% by mass, the nonaqueous solvent is usually a compound different from the first compound and the second compound.

From the same viewpoint, even in a case where the nonaqueous electrolyte solution contains two kinds selected from the group consisting of the compound represented by Formula (2-1), the compound represented by Formula (2-2), and the compound represented by Formula (2-3) as the second compound, the total content of the first compound and the two kinds of the second compounds may be 0.1% by mass to 10% by mass with respect to the total amount of the nonaqueous electrolyte solution.

Further, from the same viewpoint, in a case where the nonaqueous electrolyte solution contains three kinds of the compound represented by Formula (2-1), the compound represented by Formula (2-2), and the compound represented by Formula (2-3) as the second compound, the total content of the first compound and the three kinds of the second compounds may be 0.5% by mass to 10% by mass with respect to the total amount of the nonaqueous electrolyte solution.

A ratio of the content of the first compound to the content of the second compound in the nonaqueous electrolyte solution may be in the same range as the ratio in the additive for a nonaqueous electrolyte solution.

The electrolyte may be a lithium salt which serves as an ion source of lithium ions. The electrolyte may be at least one selected from the group consisting of LiAlCl₄, LiBF₄, LiPF₆, LiClO₄, lithium bistrifluoromethanesulfonimide (LiTFSI), lithium bisfluorosulfonimide (LiFSI), LiAsF₆, and LiSbF₆. It is preferable that LiBF₄ and/or LiPF₆ may be selected as the electrolyte from the viewpoints that it has a high degree of dissociation, can enhance the ion conductivity of the electrolyte solution, and has an action of reducing a deterioration of the performance of an electricity storage device caused by a long-term use due to the oxidation-reduction resistance characteristics. The electrolyte may be used alone or in combination of two or more kinds thereof.

In a case where the electrolyte is LiBF₄ and/or LiPF₆, these may be combined with a cyclic carbonate and a chain carbonate as the nonaqueous solvent. In a case where the electrolyte is LiBF₄ and/or LiPF₆, these may be combined with ethylene carbonate and diethyl carbonate as the nonaqueous solvent.

The concentration of the electrolyte in the nonaqueous electrolyte solution may be 0.1 mol/L or more, or may be 2.0 mol/L or less with respect to the volume of the nonaqueous electrolyte solution. In a case where the concentration of the electrolyte is 0.1 mol/L or more, it is easy to sufficiently secure the electrical conductivity of the nonaqueous electrolyte solution. Therefore, it is easy to obtain stable discharge characteristics and charge characteristics of the electricity storage device. In a case where the concentration of the electrolyte is 2.0 mol/L or less, it is possible to reduce an increase in the viscosity of the nonaqueous electrolyte solution, and it is particularly easy to secure the mobility of ions. In a case where the mobility of the ions is insufficient, the electrical conductivity of the electrolyte solution cannot be sufficiently ensured, and there is a possibility that the charge/discharge characteristics and the like of the electricity storage device are hindered. From the same viewpoint, the concentration of the electrolyte may be 0.5 mol/L or more, and may be 1.5 mol/L or less.

The nonaqueous electrolyte solution may further contain a nonaqueous solvent. The nonaqueous solvent may be the same compound as the first compound or the second compound, or may be a compound different from the first compound and the second compound, and the compound represented by Formula (2-1a) may be used as the nonaqueous solvent. The content of the compound represented by Formula (2-1a), which serves as both an additive and a nonaqueous solvent, is usually more than 5% by mass with respect to the total amount of the nonaqueous electrolyte solution. In that case, the nonaqueous electrolyte solution may or may not include, as an additive, a second compound different from the compound represented by Formula (2-1a).

From the viewpoints of, for example, reducing the viscosity of a nonaqueous electrolyte solution thus obtained to a lower value, it is possible to select an aprotic solvent as the nonaqueous solvent. The aprotic solvent may be at least one selected from the group consisting of a cyclic carbonate, a chain carbonate, an aliphatic carboxylic acid ester, a lactone, a lactam, a cyclic ether, a chain ether, a sulfone, a nitrile, and a halogen derivative thereof. As the aprotic solvent, the cyclic carbonate or the chain carbonate can be selected, and a combination of the cyclic carbonate and the chain carbonate can also be selected.

Examples of the cyclic carbonate include ethylene carbonate, propylene carbonate, butylene carbonate, and fluoroethylene carbonate. Examples of the chain carbonate include dimethyl carbonate, diethyl carbonate, and ethyl methyl carbonate. Examples of the aliphatic carboxylic acid ester include methyl acetate, ethyl acetate, methyl propionate, ethyl propionate, methyl butyrate, methyl isobutyrate, and methyl trimethylacetate. Examples of the lactone include γ-butyrolactone. Examples of the lactam include ε-caprolactam and N-methylpyrrolidone. Examples of the cyclic ether include tetrahydrofuran, 2-methyltetrahydrofuran, tetrahydropyran, and 1,3-dioxolane. Examples of the chain ether include 1,2-diethoxyethane and ethoxymethoxyethane. Examples of the sulfone include sulfolane. Examples of the nitrile include acetonitrile. Examples of the halogen derivative include 4-fluoro-1,3-dioxolan-2-one, 4-chloro-1,3-dioxolan-2-one, and 4,5-difluoro-1,3-dioxolan-2-one. These nonaqueous solvents may be used alone or in combination of two or more kinds thereof. These nonaqueous solvents are particularly suitable for use in nonaqueous electrolyte solution secondary batteries such as a lithium ion battery.

The content of the nonaqueous solvent in the nonaqueous electrolyte solution may be, for example, 70% to 99% by mass with respect to the total amount of the nonaqueous electrolyte solution. In a case where the first compound, the second compound, or a both thereof serve as both an additive and a nonaqueous solvent, the content of the first compound and the second compound that serve as both an additive and a nonaqueous solvent may be 70% to 99% by mass with respect to the total amount of the nonaqueous electrolyte solution, and the total of the content of the first compound and the second compound that serve as both an additive and a nonaqueous solvent, and the content of other nonaqueous solvents may be 70% to 99% by mass with respect to the total amount of the nonaqueous electrolyte solution.

An electricity storage device according to the present disclosure is mainly composed of the nonaqueous electrolyte solution, a positive electrode, and a negative electrode. Specific examples of the electricity storage device include nonaqueous electrolyte solution secondary batteries (a lithium ion battery and the like). The nonaqueous electrolyte solution according to the present disclosure is particularly effective in applications of the lithium ion battery.

Fig. 1 is a cross-sectional view schematically showing an example of an electricity storage device. The electricity storage device 1 shown in Fig. 1 is a nonaqueous electrolyte solution secondary battery. The electricity storage device 1 includes a positive electrode plate 4 (positive electrode), a negative electrode plate 7 (negative electrode) facing the positive electrode plate 4, a nonaqueous electrolyte solution 8 disposed between the positive electrode plate 4 and the negative electrode plate 7, and a separator 9 provided in the nonaqueous electrolyte solution 8. The positive electrode plate 4 has a positive electrode collector 2 and a positive electrode active material layer 3 provided on the side of the nonaqueous electrolyte solution 8. The negative electrode plate 7 has a negative electrode collector 5 and a negative electrode active material layer 6 provided on the side of the nonaqueous electrolyte solution 8. As the nonaqueous electrolyte solution 8, the nonaqueous electrolyte solution according to the above-mentioned embodiment can be used. Although Fig. 1 shows the nonaqueous electrolyte solution secondary battery as the electricity storage device, an electricity storage device obtained by application of the nonaqueous electrolyte solution is not limited thereto, and it may be another electricity storage device such as an electric double layer capacitor.

The positive electrode collector 2 and the negative electrode collector 5 may be, for example, a metal foil formed of a metal such as aluminum, copper, nickel, and stainless steel.

The positive electrode active material layer 3 includes a positive electrode active material. The positive electrode active material may be a lithium-containing composite oxide. Specific examples of the lithium-containing composite oxide include LiMnO₂, LiFeO₂, LiMn₂O₄, Li₂FeSiO₄, LiNiCoMnO₂, LiNi₅Co₂Mn₃O₂, Li_{z}Ni_{(1-x-y)}CoₓM_{y}O₂ (x, y, and z are numerical values satisfying 0 ≤ x ≤ 0.40, 0 ≤ y < 0.40, and 0.90 ≤ z ≤ 1.20, respectively, and M represents at least one element selected from Mn, V, Mg, Mo, Nb, and Al), LiFePO₄, and Li_{z}CO₍₁₋ₓ₎MₓO₂ (where x and z are numerical values satisfying 0 ≤ x ≤ 0.1 and 0.97 ≤ z ≤ 1. 20, respectively, and M represents at least one element selected from the group consisting of Mn, Ni, V, Mg, Mo, Nb, and Al.).

Since the additive for a nonaqueous electrolyte solution according to the present disclosure can effectively cover the electrode surface, the positive electrode active material may be Li_{z}Ni_{(1-x-y)}CoₓM_{y}O₂ (x, y, and z represent numerical values satisfying 0.01 ≤ x ≤ 0.20, 0 ≤ y ≤ 0.30, and 0.90 ≤ z ≤ 1.20, respectively, and M represents at least one element selected from the group consisting of Mn, V, Mg, Mo, Nb, and Al), Li_{z}Ni_{(1-x-y)}CoₓM_{y}O₂ (x, y, and z are numerical values satisfying 0.01 ≤ x ≤ 0.15, 0 ≤ y ≤ 0.15, and 0.97 ≤ z ≤ 1.20, respectively, and M is at least one element selected from Mn, Ni, V, Mg, Mo, Nb, and Al), or Li_{z}CO₍₁₋ₓ₎MₓO₂ (where x and z are numerical values satisfying 0 ≤ x ≤ 0. 1 and 0.97 ≤ z ≤ 1.20, respectively, and M represents at least one element selected from Mn, V, Mg, Mo, Nb, and Al). In particular, in a case where a positive electrode active material with a high Ni ratio, such as Li_{z}Ni_{(1-x-y})CoₓM_{y}O₂ (x, y, and z are numerical values satisfying 0.01 ≤ x ≤ 0.20, 0 ≤ y ≤ 0.30, and 0.90 ≤ z ≤ 1.20, respectively, and M represents at least one element selected from Mn, Ni, V, Mg, Mo, Nb, and Al) is used, a deterioration in the capacity tends to occur easily. However, even in that case, it is possible to effectively reduce the deterioration in the capacity by a combination of the first compound and the second compound.

The negative electrode active material layer 6 includes a negative electrode active material. The negative electrode active material may be a material capable of absorbing and releasing lithium. Examples of such materials include carbon materials such as graphite and amorphous carbon, and oxide materials such as indium oxide, silicon oxide, tin oxide, lithium titanate, zinc oxide, and lithium oxide. The negative electrode active material may be a lithium metal or a metallic material capable of forming an alloy with lithium. Specific examples of a metal capable of forming an alloy with lithium include Cu, Sn, Si, Co, Mn, Fe, Sb, and Ag. Binary or ternary alloys containing these metals and lithium can also be used as the negative electrode active material. These negative electrode active materials may be used alone or in combination of two or more kinds thereof.

From the viewpoint of achieving a higher energy density, a carbon material such as graphite and an Si-based active material such as Si, an Si alloy, and an Si oxide may be combined as the negative electrode active materials. From the viewpoint of achieving both of the cycle characteristics and the higher energy density, graphite and the Si-based active material may be combined as the negative electrode active material. With regard to such a combination, the mass ratio of the Si-based active material to the total mass of the carbon material and the Si-based active material may be 0.5% by mass or more and 95% by mass or less, 1% by mass or more and 50% by mass or less, or 2% by mass or more and 40% by mass or less.

The positive electrode active material layer 3 and the negative electrode active material layer 6 may further include a binder. Examples of the binder include polyvinylidene fluoride (PVdF), a vinylidene fluoride-hexafluoropropylene copolymer, a vinylidene fluoride-tetrafluoroethylene copolymer, a styrene-butadiene copolymerized rubber, carboxymethyl cellulose, polytetrafluoroethylene, polypropylene, polyethylene, polyimide, polyamideimide, polyacrylic acid, polyvinyl alcohol, acrylic acid-polyacrylonitrile, polyacrylamide, polymethacrylic acid, and a copolymer thereof. The binders may be the same as or different from each other in the positive electrode active material layer and the negative electrode active material layer.

The separator 9 may be, for example, a porous film made of polyethylene, polypropylene, fluororesin, and the like.

Specific forms such as a shape and a thickness of each of members constituting the electricity storage device can be set as appropriate by those skilled in the art. The configurations of the electricity storage device are not limited to the example of Fig. 1 and modifications can be made as appropriate.

### Examples

The present invention is not limited to the following Examples.

### 1. Preparation of Nonaqueous Electrolyte Solution (Examples 1 to 4 and Comparative Examples 1 to 5)

### (Example 1)

Ethylene carbonate (EC) and diethyl carbonate (DEC) were mixed at a volume ratio of EC:EMC = 30:70 to obtain a nonaqueous mixed solvent. LiPF₆ as an electrolyte was dissolved in the nonaqueous mixed solvent to a concentration of 1.0 mol/L. To the obtained solution were added the compound represented by Formula (1-6) and the compound represented by Formula (2-1a) as an additive for a nonaqueous electrolyte solution, thereby preparing a nonaqueous electrolyte solution. The content of the compound represented by Formula (1-6) was 1.0% by mass with respect to the total amount of the nonaqueous electrolyte solution. The content of the compound represented by Formula (2-1a) was 1.0% by mass with respect to the total amount of the nonaqueous electrolyte solution.

### (Example 2)

A nonaqueous electrolyte solution was prepared in the same manner as in Example 1, except that the compound represented by Formula (2-1a) was changed to the above-mentioned compound represented by Formula (2-1i).

### (Example 3)

A nonaqueous electrolyte solution was prepared in the same manner as in Example 1, except that the compound represented by Formula (2-1a) was changed to the compound represented by Formula (2-2a), and the contents of the compound represented by Formula (1-6) and the compound represented by Formula (2-2a) were set to 0.5% by mass and 0.5% by mass, respectively.

### (Example 4)

A nonaqueous electrolyte solution was prepared in the same manner as in Example 3, except that the compound represented by Formula (2-2a) was changed to the above-mentioned compound represented by Formula (2-3a).

### (Comparative Example 1)

A nonaqueous electrolyte solution was prepared in the same manner as in Example 1, except that the compound represented by Formula (1-6) and the compound represented by Formula (2-1a) were not added.

### (Comparative Example 2)

A nonaqueous electrolyte solution was prepared in the same manner as in Example 1, except that the compound represented by Formula (2-1a) was not added.

### (Comparative Example 3)

A nonaqueous electrolyte solution was prepared in the same manner as in Example 1, except that the compound represented by Formula (1-6) was not added and the compound represented by Formula (2-1a) was changed to the compound represented by Formula (2-1i).

### (Comparative Example 4)

A nonaqueous electrolyte solution was prepared in the same manner as in Example 1, except that the compound represented by Formula (1-6) was not added and the compound represented by Formula (2-1a) was changed to the compound represented by Formula (2-2a).

### (Comparative Example 5)

A nonaqueous electrolyte solution was prepared in the same manner as in Example 1, except that the compound represented by Formula (1-6) was not added and the compound represented by Formula (2-1a) was changed to the compound represented by Formula (2-3a).

### 2. Evaluation

### (Manufacture of Nonaqueous Electrolyte Solution Secondary Battery)

LiNi_{0.5}Co_{0.2}Mn_{0.3}O₂ as a positive electrode active material and carbon black as an electrical conductivity-imparting agent were dry-mixed. A mixture thus obtained was uniformly dispersed in N-methyl-2-pyrrolidone (NMP) in which polyvinylidene fluoride (PVDF) as a binder had been dissolved, thereby manufacturing a slurry. The obtained slurry was applied to both surfaces of an aluminum metal foil (rectangular, thickness: 20 µm). The coating film was dried to remove NMP and the whole film was then pressed to obtain a positive electrode sheet having an aluminum metal foil as a positive electrode collector and a positive electrode active material layer formed on both surfaces thereof. The ratio of the solid contents in the positive electrode sheet was set to positive electrode active material: electrical conductivity-imparting agent:PVDF of 92:5:3 in terms of a mass ratio.

Graphite powder as a negative electrode active material, a styrene-butadiene rubber (SBR) as a binder, and carboxymethyl cellulose (CMC) as a thickener were uniformly dispersed in water including to manufacture a slurry. The obtained slurry was applied to one surface of a copper foil (rectangular, thickness: 10 µm). The coating film was dried to remove water and the whole film was then pressed to obtain a negative electrode sheet having the copper foil as a negative electrode collector and a negative electrode active material layer formed on one surface thereof. The ratio of the solid contents in the negative electrode sheet was set to negative electrode active material:CMC:SBR = 98:1:1 in terms of a mass ratio.

The manufactured positive electrode sheet and negative electrode sheet were laminated in the order of the negative electrode sheet, the separator made of polyethylene, the positive electrode sheet, the separator made of polyethylene, and the negative electrode sheet to create a battery element. This battery element was put into a bag formed of a laminated film having aluminum (thickness: 40 µm) and resin layers coating both surfaces thereof in such a way that the terminals of the positive electrode sheet and the negative electrode sheet protruded from the bag. Subsequently, each of the nonaqueous electrolyte solutions obtained in Examples and Comparative Examples was poured into the bag. The bag was vacuum-sealed to obtain a sheet-shaped nonaqueous electrolyte solution secondary battery. Further, in order to increase the adhesiveness between the electrodes, the sheet-shaped nonaqueous electrolyte solution secondary battery was sandwiched between glass plates and pressurized.

The obtained nonaqueous electrolyte solution secondary battery was charged to 4.2 V with a current corresponding to 0.2 C at 25°C and then aged by keeping it at 45°C for 24 hours. Thereafter, the nonaqueous electrolyte solution secondary battery was discharged to 3 V with a current corresponding to 0.2 C at 25°C. Subsequently, the nonaqueous electrolyte solution secondary battery was subjected to an initial charge/discharge in which an operation of charging to 4.2 V with a current corresponding to 0.2 C and discharging to 3 V with a current corresponding to 0.2 C was repeated in three cycles, thereby stabilizing the nonaqueous electrolyte solution secondary battery. Thereafter, an initial charge/discharge in which a charge/discharge was performed at a current corresponding to 1 C was performed, and the discharge capacity was measured and defined as an "initial capacity". Further, after the initial charge/discharge, the nonaqueous electrolyte solution secondary battery charged to 50% of the initial capacity was discharged at a current corresponding to 0.2 C, and a change in the battery voltage was observed. Thereafter, a DCR (Ω) was calculated by reading a change in the voltage in a case where the discharge rate was changed to 0.5 C, 1.0 C, and 2.0 C while resting for 10 minutes, and the obtained value was referred to as an "initial DCR (Ω)". The DCR indicates a resistance value of a battery, and it can be said that the lower the DCR value, the higher the output characteristics of the battery.

### (Measurement of DCR and Discharge Capacity Maintenance Rate after Cycle)

With regard to each of the nonaqueous electrolyte solution secondary batteries obtained above, a charge/discharge cycle test with a charge rate of 1 C, a discharge rate of 1 C, a charge cut-off voltage of 4.2 V, and a discharge cut-off voltage of 3 V was performed in 200 cycles. Thereafter, a charge/discharge was performed at 1 C, and the discharge capacity was measured and defined as a "capacity after cycles". Further, after the cycle test, the DCR of the nonaqueous electrolyte solution secondary battery charged to 50% of the capacity after the cycles was measured and defined as a "DCR (Ω) after cycles". Tables 1 and 2 show the initial DCR, the DCR after cycles, and the discharge capacity maintenance rate of each battery. The discharge capacity maintenance rate is calculated by an equation: Discharge capacity maintenance rate = (Capacity after cycles)/(Initial capacity).

**[Table 1]**

| | First compound | | Second compound | | Initial DCR (Ω) | DCR after cycles (Ω) | Discharge capacity maintenance rate (%) |
|---|---|---|---|---|---|---|---|
| | Type | Content (% by mass) | Type | Content (% by mass) | | | |
| Example 1 | (1-6) | 1.0 | (2-1a) | 1.0 | 0.54 | 0.62 | 88 |
| Example 2 | (1-6) | 1.0 | (2-1i) | 1.0 | 0.58 | 0.61 | 89 |
| Example 3 | (1-6) | 0.5 | (2-2a) | 0.5 | 0.61 | 0.68 | 87 |
| Example 4 | (1-6) | 0.5 | (2-3a) | 0.5 | 0.62 | 0.48 | 89 |

**[Table 2]**

| | First compound | | Second compound | | Initial DCR (Ω) | DCR after cycles (Ω) | Discharge capacity maintenance rate (%) |
|---|---|---|---|---|---|---|---|
| | Type | Content (% by mass) | Type | Content (% by mass) | | | |
| Comparative Example 1 | | - - | - | - | 0.65 | 1.1 | 65 |
| Comparative Example 2 | (1-6) | 1.0 | - | - | 0.52 | 0.68 | 83 |
| Comparative Example 3 | - | - | (2-1i) | 1.0 | 0.71 | 0.96 | 89 |
| Comparative Example 4 | - | - | (2-2a) | 1.0 | 0.69 | 0.86 | 85 |
| Comparative Example 5 | - | - | (2-3a) | 1.0 | 0.72 | 0.53 | 90 |

From these experimental results, it was confirmed that the combination of the first compound and the second compound provided an electricity storage device with a low initial resistance and a long life.

### Reference Signs List

1: electricity storage device (nonaqueous electrolyte solution secondary battery), 2: positive electrode collector, 3: positive electrode active material layer, 4: positive electrode plate, 5: negative electrode collector, 6: negative electrode active material layer, 7: negative electrode plate, 8: nonaqueous electrolyte solution, 9: separator.

## Claims

1. An additive for a nonaqueous electrolyte solution, comprising:
a first compound represented by Formula (1); and
at least one second compound selected from the group consisting of a compound represented by Formula (2-1), a compound represented by Formula (2-2), and a compound represented by Formula (2-3), 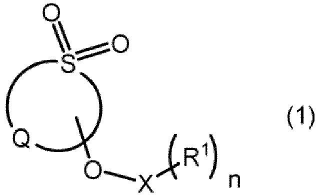
in Formula (1),
Q represents an alkenylene group having 4 to 8 carbon atoms, which may be substituted, the alkenylene group forming a cyclic group together with a sulfur atom of a sulfonyl group, X represents a sulfonyl group, a carbonyl group, or a phosphoryl group, R¹ represents an alkyl group having 1 to 4 carbon atoms, which may be substituted, an alkenyl group having 2 to 6 carbon atoms, which may be substituted, an alkynyl group having 2 to 6 carbon atoms, which may be substituted, an aryl group which may be substituted, an alkoxy group having 1 to 4 carbon atoms, which may be substituted, an alkenyloxy group having 2 to 6 carbon atoms, which may be substituted, an alkynyloxy group having 2 to 6 carbon atoms, which may be substituted, or an aryloxy group which may be substituted, and n represents 1 or 2, 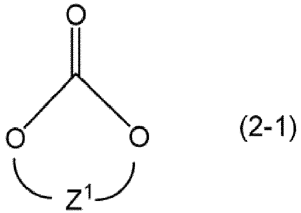
in Formula (2-1), Z¹ represents an alkylene group having 1 to 3 carbon atoms, which may be substituted, or an alkenylene group having 2 to 4 carbon atoms, which may be substituted, 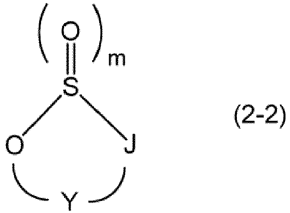
in Formula (2-2), Y represents an alkylene group having 1 to 3 carbon atoms, or an alkenylene group having 2 to 4 carbon atoms, which may be substituted, J represents an oxygen atom or a single bond, and m represents 1 or 2, 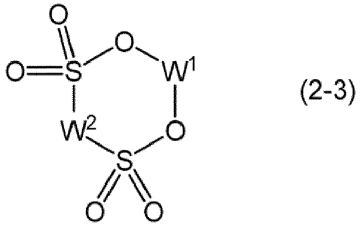
in Formula (2-3), W¹ and W² each independently represent a substituted or unsubstituted alkylene group having 1 to 3 carbon atoms, which may be branched, a substituted or unsubstituted perfluoroalkylene group having 1 to 3 carbon atoms, which may be branched, or a substituted or unsubstituted fluoroalkylene group having 1 to 3 carbon atoms, which may be branched.

2. The additive for a nonaqueous electrolyte solution according to claim 1,
wherein the compound represented by Formula (1) is a compound represented by Formula (3), 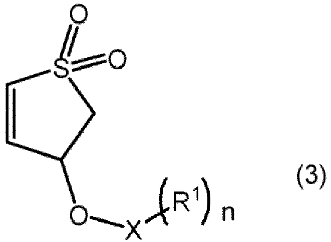
in Formula (3), X, R¹, and n have the same definitions as X, R¹ and n in Formula (1), respectively.

3. The additive for a nonaqueous electrolyte solution according to claim 1 or 2,
wherein R¹ is an alkyl group having 1 to 3 carbon atoms, which may be substituted with a halogen atom, an alkenyl group having 2 to 4 carbon atoms, which may be substituted with a halogen atom, an alkynyl group having 2 to 4 carbon atoms, which may be substituted with a halogen atom, or an aryl group which may be substituted with a halogen atom.

4. A nonaqueous electrolyte solution comprising:
the additive for a nonaqueous electrolyte solution according to any one of claims 1 to 3;
a nonaqueous solvent; and
an electrolyte.

5. The nonaqueous electrolyte solution according to claim 4,
wherein a content of the first compound is 0.05% by mass to 5% by mass with respect to a total amount of the nonaqueous electrolyte solution,
a content of each of the compound represented by Formula (2-1), the compound represented by Formula (2-2), and the compound represented by Formula (2-3) in a case where any one of these compounds is included in the nonaqueous electrolyte solution is 0.05% by mass to 5% by mass with respect to the total amount of the nonaqueous electrolyte solution, and
the nonaqueous solvent is a compound different from the first compound and the second compound.

6. The nonaqueous electrolyte solution according to claim 4 or 5,
wherein the electrolyte includes a lithium salt.

7. An electricity storage device comprising:
the nonaqueous electrolyte solution according to any one of claims 4 to 6;
a positive electrode including a positive electrode active material; and
a negative electrode including a negative electrode active material.

8. The electricity storage device according to claim 7,
wherein the positive electrode active material includes a lithium-containing composite oxide represented by Li_{z}Ni_{(1-x-y)}CoₓM_{y}O₂ (x, y, and z are numerical values satisfying 0 ≤ x ≤ 0.40, 0 ≤ y ≤ 0.40, and 0.90 ≤ z ≤ 1.20, respectively, and M represents at least one element selected from the group consisting of Mn, V, Mg, Mo, Nb, and Al).

9. The electricity storage device according to claim 7,
wherein the positive electrode active material includes a lithium-containing composite oxide represented by Li_{z}Ni_{(1-x-y)}CoₓM_{y}O₂ (x, y, and z are numerical values satisfying 0.01 ≤ x ≤ 0.20, 0 ≤ y ≤ 0.30, and 0.90 ≤ z ≤ 1.20, respectively, and M represents at least one element selected from the group consisting of Mn, V, Mg, Mo, Nb, and Al).
